# EUROPEAN PATENT SPECIFICATION

(11) **EP 4 466 600 B1**
(45) Date of publication and mention of the grant of the patent: **10.09.2025**
(21) Application number: 23713218.8
(22) Date of filing: 07.03.2023
(51) Int. Cl.: G06F 3/12, B41J 3/28, B65B 61/26, B41J 3/407

(54) **SYSTEM AND METHOD FOR PRINTING PACKAGES**
SYSTEM UND VERFAHREN ZUM DRUCKEN VON VERPACKUNGEN
SYSTÈME ET PROCÉDÉ D'IMPRESSION DE PAQUETS

(30) Priority: 07.03.2022 US 202263317186 P
(43) Date of publication of application: 27.11.2024
(73) Proprietor: Cryovac, LLC, Charlotte, NC 28208 (US)
(72) Inventor: CYMAN, Theodore F., Minneola, FL 34715 (US); MURZYNOWSKI, Alan Ronald, Grand Island, NY 14072 (US); KANFOUSH, Daniel Edward, Grand Island, NY 14072 (US); ROCCO, Frank J., N. Tonawanda, NY 14120 (US); MOSCATO, Anthony Vincent, N. Tonawanda, NY 14120 (US); CONIGLIO, Paul A., East Amherst, NY 14051 (US)
(74) Representative: Uexküll & Stolberg
(86) International application number: PCT/US2023/014668
(87) International publication number: WO 2023/172526

(56) References cited:
- US-A1- 2006 118 631
- US-A1- 2011 292 431
- US-A1- 2016 214 373

## Description

### BACKGROUND

The subject matter disclosed herein relates to printing systems and methods, and more particularly, to a system and method for printing on one or more packages.

Printing systems have been developed for printing on labels wherein the labels are attached to packages that are to be shipped. Some such printing systems receive print commands using a printing language. The print commands are divided into a plurality of blocks of commands, wherein each block is associated with a label or other content to be printed on the box. For each block of commands, a controller operates a printing device to print indicia on a label in accordance with the block of commands. Typically, the label is removably secured to a liner. After printing, the label may be released from the liner and applied to a corresponding package. Label printing systems are typically suitable for printing text, line art, and two-color bitmaps on labels.

In a production environment, the label printing system is proximate or incorporated into a production system comprising a conveying system. During production packages that are to be shipped are loaded on to the conveying system in accordance with a sequence determined by a production database. In addition, printing data commands are generated in accordance with the production database and provided to the label printing system in a sequence that matches the sequence in which packages are supposed to be loaded on the conveyor. The label is printed and affixed to the package at a labeling station as the package is conveyed past such labeling station by the conveying system. If before arriving at the labeling station, a package is loaded onto the conveying system out of sequence (e.g., if the package is produced out of sequence or manually loaded out of sequence because of an error) or if the sequence in which the packages are loaded is changed (e.g., if a package falls of the conveying system and is loaded following other packages), the sequence in which labels are provided at the labeling station will not match the sequence in which the packages arrive at the labeling station. Quality checks may need to be implemented to confirm that the correct label is applied to a package. Further, corrective measures may need to be implemented to generate additional labels for mislabeled packages due to the mismatch between the sequences in which labels are generated and in which packages reach the labeling stations.

US 2006/0118631 A1 describes a printing method and apparatus for printing barcode information of a product on a label or container belonging to the product. A first component of a composite barcode identifies the product and is either pre-printed or printed during a production run, and a second component, indicative of a production lot, batch, expiration date or commodity number, is printed during the production run. After the production run, consistency checks can be conducted by comparing the product and production information from the barcodes with the respective information from a production database.

US 2011/092431 A1 discloses a printing apparatus for printing customer content on selected ones of a variety of pre-printed stocks. A scanner scans printed area of each pre-printed stock for identifying the type of each pre-printed stock. Customer orders include print content and a selection of the type of pre-printed stock. The print job is carried out so that for each customer order the print content is printed on the type of pre-printed stock that matches the type selection in the customer order.

The discussion above is merely provided for general background information and is not intended to be used as an aid in determining the scope of the claimed subject matter.

### BRIEF DESCRIPTION

A method for printing on objects according to the present invention comprises the features of claim 1. Preferred embodiments of the method are set out in dependent claims 2 - 5.

A system for printing on objects according to the present invention comprises the features of claim 6. Preferred embodiments of the system are set out in dependent claims 7 - 10.

Other aspects and advantages will become apparent upon consideration of the following detailed description and the attached drawings wherein like numerals designate like structures throughout the specification.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIGS. 1 and 2 are simplified isometric views of a system for printing on a package taken from opposite ends thereof;
FIG 3 is a block diagram of processing units that comprise a control system of the system for printing of FIGS. 1 and 2;
FIG. 4 is an example of printing commands received by the system for printing of FIGS. 1 and 2;
FIG. 5 shows the components of the control system of FIG. 3;
FIG. 6A and 6B, when taken along the similarly lettered lines, together comprise a flowchart of steps undertaken by the control system of FIG. 3; and
FIG. 7 is an enlarged, fragmentary, isometric view with portions removed therefrom of the system for printing of FIGS. 1 and 2.

### DETAILED DESCRIPTION

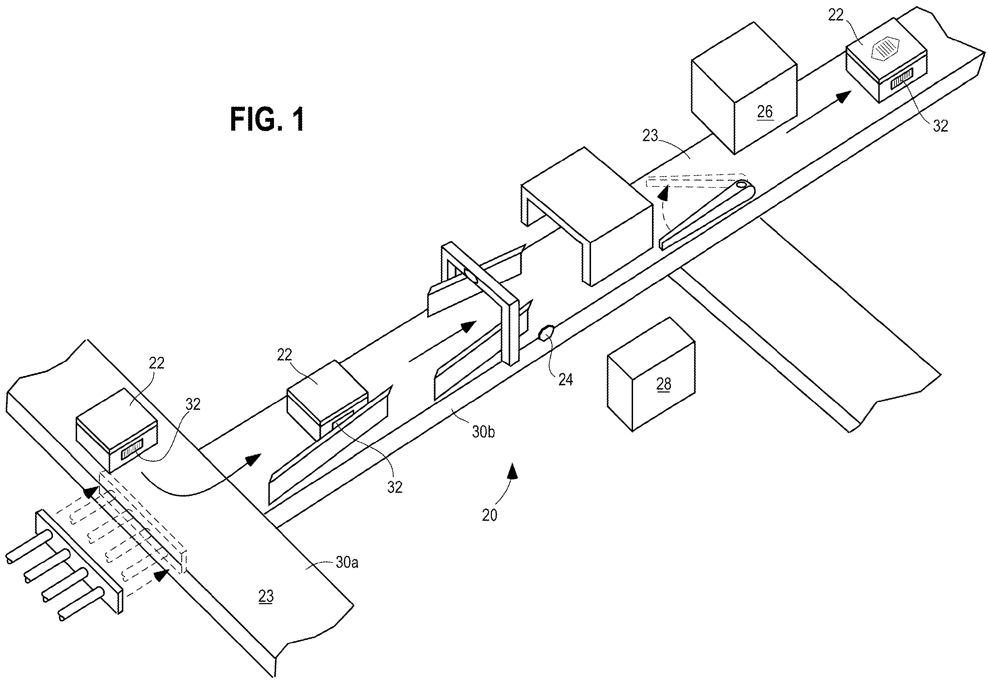

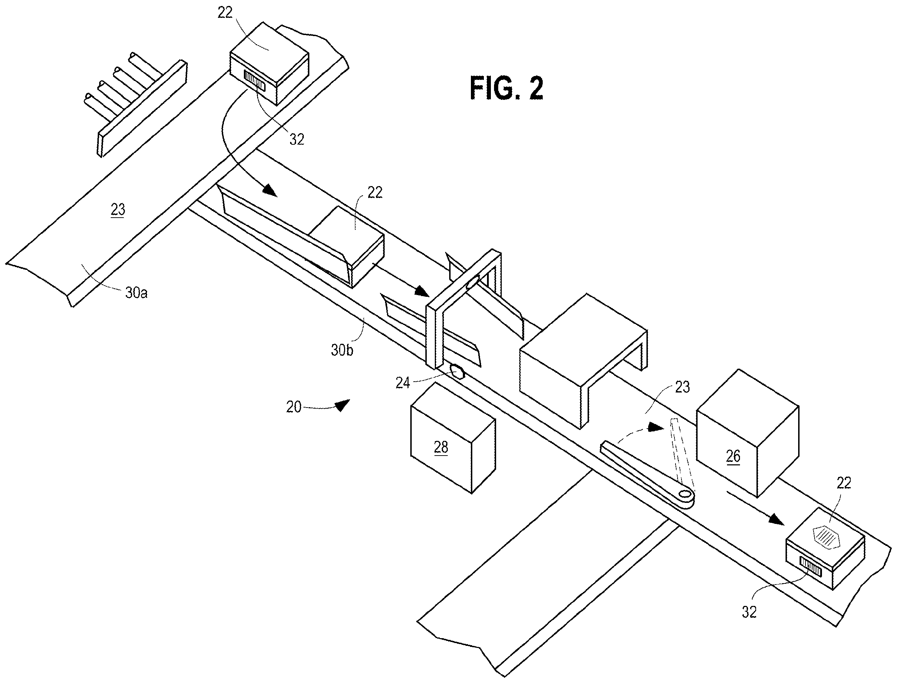

Referring to FIGS. 1 and 2, a system 20 for marking objects or packages, such as sealed boxes 22 that are loaded with one or more items to be shipped, includes a conveying system 23 for transporting one or more packages, such as boxes 22, a barcode sensor 24, a print system 26, and a control system 28. The conveying system 23 comprises at least one, and preferably, multiple conveyors (two conveyors 30a and 30b are in the illustrated embodiment) that move the boxes 22 in a continuous manner along one or more main transport paths to and past the barcode sensor 24 and the print system 26 in sequence. Each box 22 includes a barcode 32 encoded with a unique identifier that is associated with a recipient of the box. The barcode 32 is located on an exterior wall of the box in a predetermined region so that barcode sensor 24 will detect and scan the barcode 32 as the box 22 is conveyed thereby. The barcode 32 may be a one-dimensional barcode, a two-dimensional barcode (e.g., a QR code and the like), a sequence of alphanumeric and/or symbolic characters in a predetermined format, a combination of such symbols, and the like. The system 20 may print a combination of customized content including indicia and high-quality images, based on information carried by the package 22. The indicia may be printed at a resolution lower than the images or at another resolution, including the same resolution.

Diverter gates, positioning apparatus, and other conveyor components are typically included as part of the conveying system 23 but are omitted from FIGS. 1 and 2 for clarity.

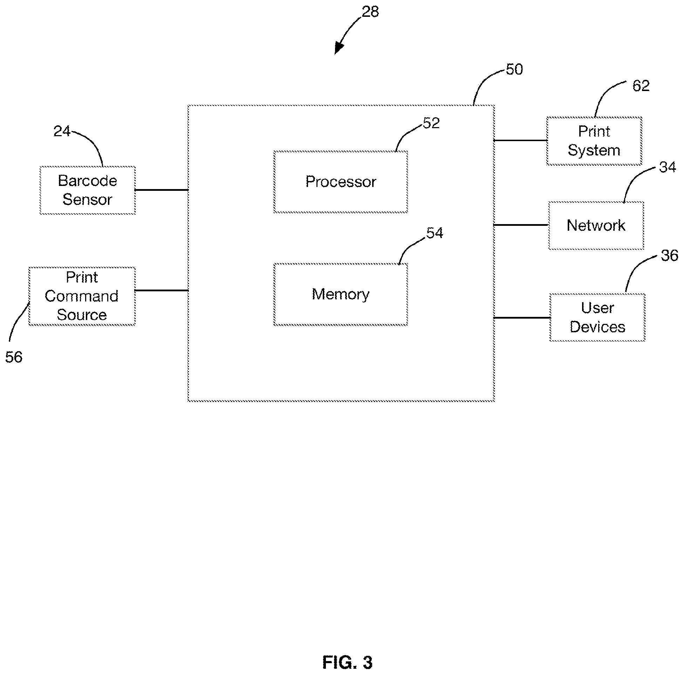

Referring also to FIG. 3, the control system 28 may be implemented using hardware, software, or firmware or combinations thereof. In the illustrated embodiment, the control system 28 may be implemented by one or more suitably programmed computer-based devices, some or each having a processing module and a memory. Each device may comprise, e.g., a desktop or laptop computer, a server, a device using one or more application specific integrated circuits (ASIC's) and/or field-programmable gate arrays (FPGA's), a tablet, a smartphone, etc. and/or combinations thereof. The control system 28 may be unitary or may be distributed across one or more networks. As seen in FIG. 3, the control system 28 is coupled to one or more network(s) 34 such as a local area network (LAN), a wide area network (WAN) such as the Internet, and the like. The control system 28 is also coupled to one or more user device(s) 36 such as a keyboard, a mouse, a display, a touchscreen, etc. Further, one or more of the user devices 36 may be coupled to the control system 28 directly via, for example, a serial connection, video connection (HDMI, VGA, etc.), and the like. In some cases, one or more of the user device(s) 36 may be coupled to control system 28 via the network 34. The control system 28 is responsive to commands supplied thereto by a user via the user devices 36. In the illustrated embodiment, the control system 28 is implemented by a single programmed device 50 having a processing module 52 and a memory 54. The memory 54 has stored therein, among other things, programming instructions executed by one or more processing modules 52 to implement the control system 28 as described herein.

The control system 28 receives a stream of print commands developed print command source 56. In some embodiments, the print commands are developed using, for example, Postscript and/or Portable Data Format languages specified by Adobe Systems Incorporated of San Jose, California, Zebra Programming Language (ZPL) specified by Zebra Technologies of Lincolnshire, Illinois, Printer Command Language (PCL) specified by Hewlett Packard Company of Palo Alto, California, and the like. The stream of print commands may be transmitted or provided to the control system 28 in any manner apparent to one who has ordinary skill in the art, e.g., via network 34, a local storage device, and the like. In some embodiments, upon receipt, the control system 28 stores the stream of label print commands in the memory 54 thereof.

As the box 22 traverses past the barcode sensor 24, the barcode sensor 24 reads the barcode 32 or other indicia on the box 22 and provides the unique identifier encoded in the barcode 32 or other indica to the control system 28. The unique identifier may be associated with information regarding the box 22 including, but not limited to, the contents of the box 22, the weight of the box 22 (alone and/or in combination with the contents), dimensions of the box 22, the intended recipient of the box 22, and shipping information (e.g., address, postage, etc.) associated with the box 22. The control system 28 may use the unique identifier to retrieve such information regarding the box 22 from a memory or data store accessible thereto. As described in greater detail below, the control system 28 uses the unique identifier to select and process a portion (or block) of the stream of commands that is associated with the unique identifier encoded in the barcode 32 to generate printed content that is printed on the box 22 as the box is conveyed past the printing system 26. The image is a bitmap or multi-color image that represents content including, for example, recipient information (name, address, postage, tracking information, etc.), information regarding contents of the package, marketing information, and the like, as specified by the block of the stream of commands.

The barcode sensor 24 and control system 28 operate in this manner to develop and print on each of the boxes 22 loaded onto the conveying system 23.

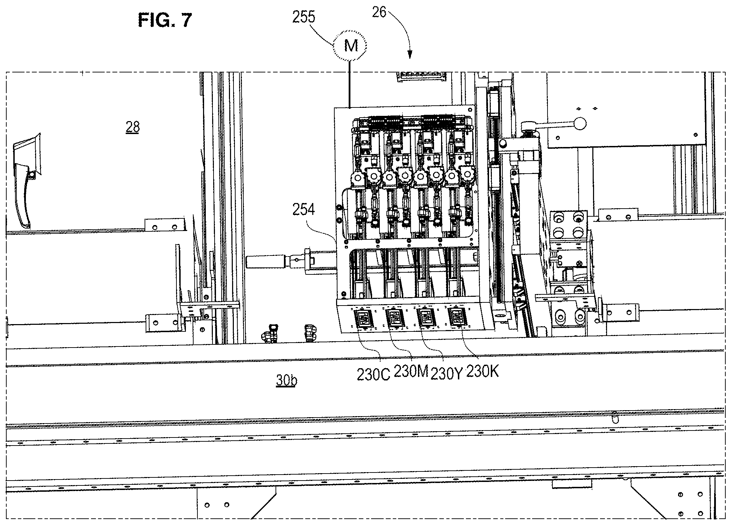

Referring to FIG. 7, in some embodiments, the print system 26 comprises one or more ink jet heads 230 that receive ink from an ink supply (not shown). In some cases, there are four ink jet heads 230C, 230M, 230Y, and 230K that receive cyan, magenta, yellow, and black inks, respectively, from the ink supply. In some embodiments, the ink jet heads 230 are disposed on a carrier in the form of a movable print head housing 254 that is movable up and down by a motor 255 to position the printheads 230 in a position to print on a surface of the box 22 as the box is conveyed past the print system 26. In some embodiments, the one or more ink jet heads 230 are drop on demand ink jet print heads either of piezoelectric or thermal type. It should be apparent to one who has ordinary skill in the art that the print system 26 may comprise fewer or more than four inkjet heads and that the print system 26 may comprise printing technologies other than inkjet.

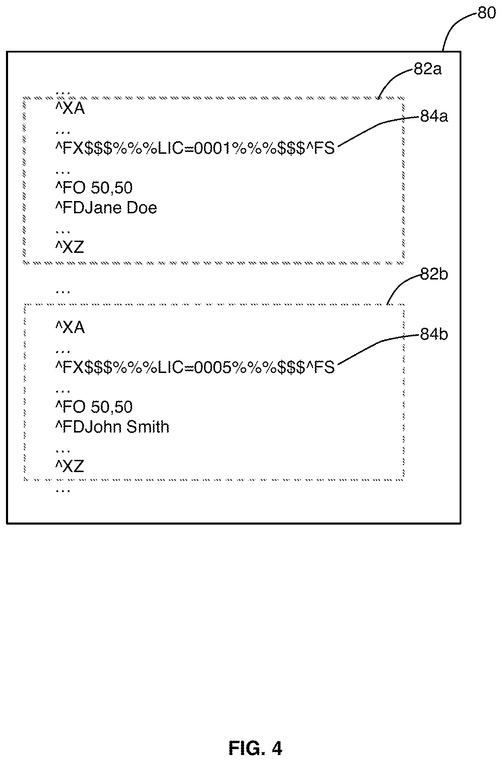

FIG. 4 is an example of a stream of print commands 80 that may be received by the control system 28. The stream of print commands 80 is divided into a plurality of blocks of print commands 82, only two of which 82a, 82b are shown, wherein each block of print commands 82 is associated with a particular box 22 (and thus the recipient of such box). In the example shown in FIG. 4, the start of each block of print commands 82 is indicated by a first predetermined text string ("^XA") and the end of each block print commands 82 is indicated by a second predetermined text string ("^XZ"). Further, each block of print commands 82 includes text strings that are printing language commands and, if necessary, parameters for such commands that direct a printer to undertake an action, such as to print content. For example, in the block of print commands 82a, the string "^FO 50,50" is a command "^FO" that specifies a field origin (i.e., position) with parameters "50,50," and "^FD Jane Doe" is a command "^FD" that specifies field data with parameters "Jane Doe." A printer that is responsive to print commands shown in the block of print commands 82a would, when presented with such commands, print "Jane Doe" on a substrate at a position associated with the coordinates "50,50."

Each block of print commands 82 also includes strings delimited and identified by "^FX" and "^FS" text strings that are readable by a printer but otherwise would not cause a printer to undertake any other action. One of ordinary skill in the art would understand such strings to be analogous to comment strings in a programming language. In the illustrated embodiment of the system 20, each block of print commands 82 includes one such comment string 84 that includes a first predetermined substring "$$$%%%LIC=" that is followed by a predetermined number of characters (in this case 4) that specify the unique identifier of the box on which a representation of the content specified by the commands in the block of print commands 82 is to be printed. Thus, in the example shown in FIG. 4, a representation of a content specified by the block of print commands 82a associated with the unique identifier "0001" is to be printed on the box 22, as encoded in the barcode on a corresponding box 22. Further, a representation of a content specified by the block of print commands 82b is to be printed on the box 22 that has the barcode 32 thereon that is encoded with the unique identifier "0005.

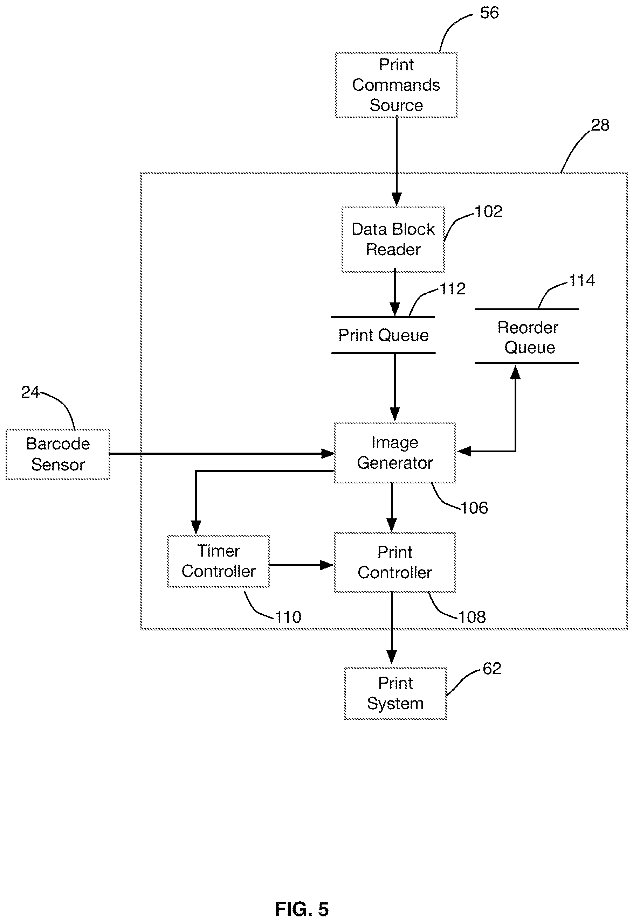

FIG. 5 is a block diagram that shows the components of one embodiment of the control system 28. As described in greater detail below, the control system 28 includes a data block reader 102, an image generator 106, a print controller 108, a timer controller 110, a print queue 112, and a reorder (or second) queue 114.

Each block of the control system shown in FIG. 5 may be implemented by software, hardware, or firmware as necessary or desirable.

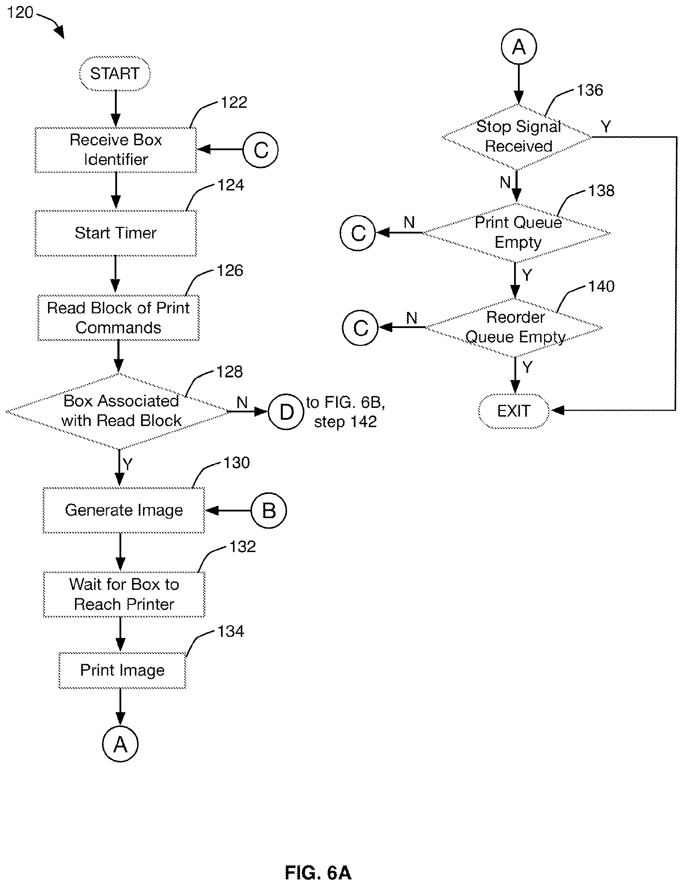

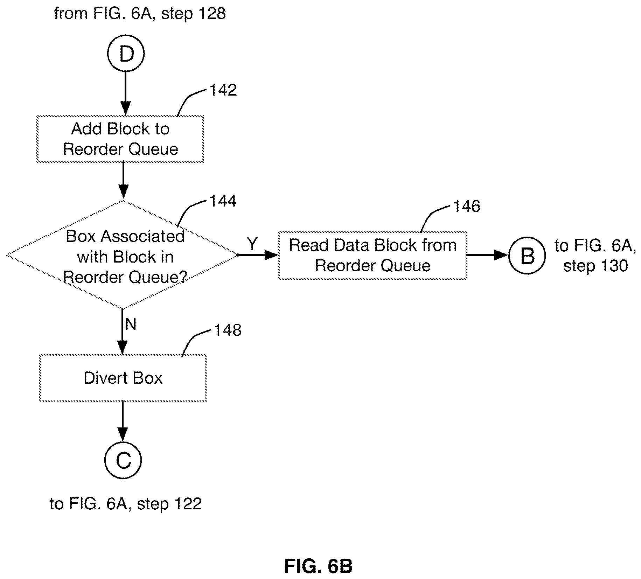

Referring next to FIGS. 6A and 6B, a flow chart 120 of programming executed by the control system 28 is operable to print multiple boxes with printed content. The programming 120 illustrated in FIGS. 6A and 6B is operable as boxes are being continuously transported by the conveying system 23 under control of the control system 28. Further, the programming described hereinafter references and is responsive to a plurality of print data blocks or blocks of print commands provided by the print commands source 56 in a sequence to the control system 28 wherein each data block comprises data associated with a corresponding box 22 to be printed on and an indication of the unique identifier encoded in the barcode 32 on such corresponding box 22. As an example, if 1000 boxes 22-1, 22-2, 22-3,...,22-1000 are to be printed in sequence, a print data stream of 1000 data blocks arranged in the same sequence are transmitted to the control system 28 as commands in synchrony with the provision of boxes 22 to the system 20.

As each data block is transmitted by the print commands source 56, the data block reader 102 receives such data block and stores the data block in the print queue 112. The data blocks 112 are stored in the print queue in accordance with the order in which such data blocks are received.

Referring to FIGS. 5, 6A, and 6B, at step 122, the image generator 106 receives from the barcode sensor 24 the unique identifier encoded in the barcode 32 (FIGS. 1 and 2) applied to the box 22 (FIGS. 1 and 2) as the box 22 is conveyed past the barcode sensor 24.

At step 124, the image generator 106 directs the timer controller 110 to start a timer and generate a signal (e.g., an interrupt) when a predetermined amount of time has elapsed.

At step 126, the image generator 106 reads from the print queue 112 the oldest data block stored therein and removes the read data block from the print queue 112.

At step 128 the image generator 106 determines if the identifier of the box encoded in the data block (e.g., in the string 84 shown in FIG. 4) read at step 126 is associated with the unique identifier received from the barcode sensor 24 at step 122 (e.g., if the two identifiers are identical, if the two identifiers share a common substring, etc.).

If the two identifiers are associated with one another, the image generator 106 at step 130 generates print data representing the content represented by the data block and provides the print data to the print controller 108.

At step 132, the print controller 108 waits to receive the signal from the timer controller 110 that the predetermined amount of time specified by the image generator 106 at step 124 has elapsed. Such predetermined amount of time is selected in accordance with the speed with which the conveying system 23 operates and the expected amount of time necessary for the box 22 to be conveyed from the barcode sensor 24 to a position for printing by the printing system 26.

In response to the signal from the timer, the print controller 108 at step 134 operates the print system 26 to print the content on a surface of the box 22 as such box is conveyed past the print system 26. In some embodiments, the print system 26 is a multi-color inkjet printing system. In such embodiments, the print controller 108 creates halftone bitmaps of each color plane of the page to be printed and supplies such bitmaps to the print system 26. In some embodiments, the print controller 108 generates signals to the individual print heads of the print system 26 in accordance with the halftone bitmaps to cause such print heads to eject one or more colors of ink onto the box 22 to print the page thereon.

At step 136, the control system 28 checks whether a signal has been received, for example, via the network 34 or the user device 36 that production is completed or the production should stop. If so, the control system 28 exits.

Otherwise, at step 138, the image generator 106 checks whether the print queue 112 is empty (i.e., that all the data blocks read by the data block reader 102 and stored in the print queue 112 have been processed). If the print queue 112 is not empty, the controller 28 returns to step 122 to receive another box identifier from the barcode sensor 24.

Otherwise, at step 140, the image generator 106 checks whether the reorder queue 114 (described in greater detail below) is empty. If the reorder queue 114 is not empty, the controller 28 returns to step 122 to receive another box identifier from the barcode sensor 24.

If both the print queue 112 and the reorder queues 114 are empty, the controller 28 exits.

If at step 128, the image generator 106 determines that the identifier of the box 22 encoded in the data block read from print queue 112 at step 126 is not associated with the unique identifier received from the barcode sensor 24 at step 122, the image generator 106 adds the data block to the reorder queue 114 at step 142.

Thereafter, at step 144, the image generator 106 checks the data blocks stored in the reorder queue 114 to determine if there is a data block in the reorder queue 114 that has an identifier of a box that is associated with the unique identifier received from the barcode sensor 24. If so, at step 146, the image generator 106 reads such data block from the reorder queue 114 and removes the data block from the reorder queue 114. Thereafter, the image generator 106 proceeds to step 130 to generate content data in accordance with the data block read from the reorder queue 114.

If at step 144 the image generator 106 determines that there is no data block in the reorder queue 114 associated with the unique identifier received from the barcode sensor 24 (i.e., the box 22 has been loaded on the conveyor 30 for which a data block has not been received) then at step 148, the image generator 106 signals the conveyor system 23 to divert the box 22 from a production path of the printing system 20 before the box 22 reaches the print system 26 or downstream of the print system 26. In either case, the image generator 106 does not generate any image and no content is printed on the box 22 by the print system 26 and the box 22 is diverted away from the production path (i.e., the path followed by boxes 22 that are printed on). If the box 22 is diverted before reaching the print system 26, the image generator 106 directs the timer controller 110 to cancel the timer started at step 124.

Referring also to FIG. 7, if the box 22 is diverted downstream of the print system 26, then in some embodiments, the control system 28 operates the one or more motor(s) 255 or other device(s) (not shown) to raise the housing 254 (and thus the print heads 230 disposed in such housing 254) upward away from the conveyor 30 and the box 22 that is to be diverted as such box 22 is conveyed past the print system 26. Raising the printheads 230 in this manner avoids any unwanted interaction between the box 22 that is to be diverted and any of the printheads 230 including contact between the printheads 230, ink drops or other debris from the printheads 230 falling on or marking the box 22, etc.

In some embodiments, if the box 22 is diverted, the control system 28 or the conveying system 23 provides the unique identifier associated with such box 22 to the print command source 56 to indicate that the box 22 was not printed on.

### INDUSTRIAL APPLICABILITY

Although the printing system 20 receives print data in a sequence that corresponds to a sequence in which packages are expected to reach the print system 26. If a package does not reach the barcode sensor 24 (and thus the print system 26) when expected the print data for such package is stored in the reorder queue 114. If the package is then detected at the barcode sensor 24 at a later time, the print data for the late arriving package is retrieved from the reorder queue and used to generate and print appropriate content on the package. Further, if a package reaches the barcode sensor 24 earlier in the sequence than expected, such early arrival is detected, and the package may be diverted. Thus, the print system 20 automatically ensures that the correct content is printed on each package even if the package arrives out of sequence.

It should be apparent to one who has ordinary skill in the art that a FIFO buffer, a circular list, a linked list, or other data structure may be used to organize memory that is used to implement the print queue 112 and the reorder queue 114.

Referring once again to FIG. 1, in one embodiment, the conveying system 23 operates at a speed between approximately 0.41 m/s and approximately 0.46 m/s (approximately 80 and approximately 90 feet per minute) to move the boxes 22 past the print system 26. In other embodiments, the conveying system 23 operates at a speed between approximately 0.61 m/s and approximately 0.76 m/s (approximately 120 and approximately 150 feet per minute). Further, in some embodiments, the conveying system 23 operates to move between approximately 30 and approximately 40 boxes per minute past the print system 26.

It should be apparent to those who have skill in the art that any combination of hardware and/or software may be used to implement components of the system 20 described herein. It will be understood and appreciated that one or more of the processes, sub-processes, and process steps described in connection with FIGS. 1-3, 5, 6A, and 6B may be performed by hardware, software, firmware or a combination of hardware, software, and firmware on one or more electronic or digitally-controlled devices. The software or firmware may reside in a memory (not shown) in a suitable electronic processing component or system such as, for example, one or more of the functional systems, controllers, devices, components, modules, or sub-modules depicted in FIG. 6 The software memory may include an ordered listing of executable instructions for implementing logical functions (that is, "logic" that may be implemented in digital form such as digital circuitry or source code, or in analog form such as analog source such as an analog electrical, sound, or video signal). The instructions may be executed within a processing module or controller (e.g., the control system 28, the data block reader 102, the image generator 106, the print controller 108, and the timer controller 110, etc.), which includes, for example, one or more microprocessors, general purpose processors, combinations of processors, digital signal processors (DSPs), field programmable gate arrays (FPGAs), application-specific integrated circuits (ASICs), and/or graphics processing units (GPUs). Further, the schematic diagrams describe a logical division of functions having physical (hardware, software, and/or firmware) implementations that are not limited by architecture or the physical layout of the functions. The example systems described in this application may be implemented in a variety of configurations and operate as hardware/software/firmware components in a single hardware/software/firmware unit, or in separate hardware/software/firmware units.

Depending on certain implementation requirements, the embodiments described can be implemented using a non-transitory storage medium such as a digital storage medium, for example, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments disclosed herein a data carrier having electronically readable control signals, which are capable of cooperating with a processor, a controller, or a programmable computer system, such that at least one of the methods described herein is performed.

Generally, embodiments disclosed herein can be implemented as a computer program product with a program code, the program code being operative for performing at least one of the methods disclosed herein when the computer program product runs on a computer. The program code may, for example, be stored on a machine-readable carrier.

Other embodiments comprise the computer program for performing one of the methods described herein, stored on a machine-readable carrier.

In other words, an embodiment, therefore, may include a computer program having a program code for performing one of the methods described herein, when the computer program runs on a processor, a controller, and/or a computer.

A further embodiment of the system described herein is, therefore, a storage medium (or a data carrier, or a computer-readable medium) comprising, stored thereon, the computer program for performing at least one of the methods described herein when it is performed by a processor. The data carrier, the digital storage medium or the recorded medium are typically tangible and/or non-transitory. A further embodiment of the present invention is an apparatus as described herein comprising a processor and the storage medium.

While particular embodiments of the present invention have been illustrated and described, it would be apparent to those skilled in the art that various other changes and modifications can be made and are intended to fall within the scope of the present invention as defined in the accompanying claims.

The use of the terms "a" and "an" and "the" and similar references in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Numerous modifications to the present disclosure will be apparent to those skilled in the art in view of the foregoing description. It should be understood that the illustrated embodiments are exemplary only and should not be taken as limiting the scope of the disclosure.

This written description uses examples to disclose the invention and also to enable any person skilled in the art to practice the invention, including making and using any devices or systems and performing any methods. The patentable scope of the invention is defined by the accompanying claims.

## Claims

1. A method of printing which involves transporting objects (22) sequentially on a production path toward a print system (26) with each object (22) having an identifier encoded in indicia on the object, and a plurality of blocks of print commands (82) stored in an ordered sequence in a first queue with each block including an identifier, the method comprising for each object the steps of:
detecting and scanning (122) the identifier encoded in indicia on the object;
reading (126) the oldest block of print commands from the stored plurality of blocks and removing the oldest block of commands from the first queue; and
determining (128) whether the scanned identifier is associated with the identifier included in the oldest block,
if so:
operating (130, 132, 134) the print system (26) to printing content specified by the oldest block of print commands on the object (22),
otherwise:
storing (142) the oldest block in a second queue; and
determining (144) if the second queue contains a block including an identifier associated with the scanned identifier,
if so:
reading (146) the block from the second queue and removing said block from the second queue; and
operating (130, 132, 134) the print system (26) to printing content specified by said block from the second queue on the object,
otherwise:
diverting the object from the production path.

2. The method of claim 1, further including operating a motor to move a printhead of the print system (26) away from the object that is to be diverted as such object is conveyed there past.

3. The method of claim 1, further including diverting the object before the object reaches the print system (26).

4. The method of claim 1, wherein the scanned identifier is associated with information regarding the object including one or more of contents, shipping information, weight, dimensions, and recipient.

5. The method of claim 1, wherein the print system (26) comprises at least one drop on demand ink jet head (230).

6. A system (20) for printing comprising:
a conveying system (23) configured to transport objects sequentially toward a print system (26) on a production path with each object having an identifier encoded in indicia on the object;
a control system (28) having a first queue and a second queue, wherein the first queue has a plurality of blocks of print commands (82) stored therein in an ordered sequence with each block including an identifier;
a sensor (24) configured to read the identifier encoded in indicia on each of the transported objects;
an image generator (106) configured, every time after the sensor (24) read an identifier, to read the oldest block of print commands from the stored plurality of blocks and to remove the oldest block from the first queue; and
a print controller (108),
wherein the image generator (106) is configured to determine for the respective object whether the read identifier is associated with the identifier included in the oldest block,
if so:
to cause the print controller (108) to print content specified by the oldest block of print commands on the object,
otherwise:
to store the oldest block in the second queue; and
to determine (144) if the second queue contains a block including an identifier associated with the read identifier,
if so:
to read (146) the block from the second queue and removes said block from the second queue; and
to cause the print controller (108) to print content specified by said block from the second queue on the object,
otherwise:
to divert the object from the production path.

7. The system of claim 6, further including a motor (255), and the control system (28) being configured to operate the motor (255) to move a printhead (230) of the print system (26) away from the object that is to be diverted as such object is conveyed there past.

8. The system of claim 6, wherein the conveying system (23) is configured to divert the object before the object reaches the print system (26).

9. The system of claim 6, wherein the read identifier is associated with information regarding the object including one or more of contents, shipping information, weight, dimensions, and recipient.

10. The system of claim 6, wherein the print system (26) comprises at least one drop on demand ink jet head (230).

## Patentansprüche

1. Druckverfahren, das einen sequenziellen Transport von Objekten (22) zu einem Drucksystem (26) beinhaltet, wobei jedes Objekt (22) eine Kennung hat, die in Kennzeichen auf dem Produkt kodiert ist, und eine Mehrzahl von Blöcken von Druckbefehlen (82) beinhaltet, die in einer geordneten Sequenz in einer ersten Warteschlange gespeichert sind, wobei jeder Block eine Kennung enthält, wobei das Verfahren für jedes Objekt die Schritte beinhaltet,
die in Kennzeichen auf dem Objekt kodierte Kennung zu detektieren und zu scannen (122),
den ältesten Block von Druckbefehlen aus der gespeicherten Mehrzahl von Blöcken zu lesen (126) und den ältesten Block von Befehlen aus der ersten Warteschlange zu entfernen, und
festzustellen (128), ob die gescannte Kennung der in dem ältesten Block enthaltenen Kennung entspricht,
wenn ja:
das Drucksystem (26) zu betreiben, um den durch den ältesten Block von Druckbefehlen spezifizierten Inhalt auf das Objekt (22) zu drucken,
andernfalls:
den ältesten Block in einer zweiten Warteschlange zu speichern (142), und
festzustellen (144), ob die zweite Warteschlange einen Block mit einer Kennung enthält, die der gescannten Kennung entspricht,
wenn ja:
den Block aus der zweiten Warteschlange zu lesen (146) und den Block aus der zweiten Warteschlange zu entfernen, und
das Drucksystem (26) zu betreiben (130, 132, 134), um den durch den Block aus der zweiten Warteschlange spezifizierten Inhalt auf das Objekt zu drucken,
andernfalls:
das Objekt aus dem Produktionsweg abzuleiten.

2. Verfahren nach Anspruch 1, bei dem weiterhin ein Motor betrieben wird, um einen Druckkopf des Drucksystems (26) weg von dem Objekt zu bewegen, das abgeleitet werden soll, wenn das Objekt daran vorbei transportiert wird.

3. Verfahren nach Anspruch 1, bei dem das Objekt abgeleitet wird, bevor das Objekt das Drucksystem (26) erreicht.

4. Verfahren nach Anspruch 1, bei dem der gescannten Kennung Informationen bezüglich des Objekts zugeordnet sind, die eines oder mehrere von Inhalt, Transportinformation, Gewicht, Abmessungen und Empfänger beinhalten.

5. Verfahren nach Anspruch 1, wobei das Drucksystem wenigstens einen auf Abruf arbeitenden Tintenstrahldruckkopf (230) aufweist.

6. Drucksystem (20) mit:
einem Transportsystem (23), das zum sequenziellen Transportieren von Objekten auf einem Produktionsweg zu einem Drucksystem (26) ausgestaltet ist, wobei jedes Objekt eine in Kennzeichen auf dem Objekt kodierte Kennung hat,
einem Steuersystem (28) mit einer ersten Warteschlange und einer zweiten Warteschlange, wobei die erste Warteschlange eine Mehrzahl von darin in einer geordneten Sequenz gespeicherten Blöcken von Druckbefehlen (82) aufweist, wobei jeder Block eine Kennung enthält,
einem Sensor (24), der zum Lesen der in Kennzeichen kodierten Kennung auf jedem der transportierten Objekte ausgestaltet ist,
einem Bildgenerator (106), der dazu eingerichtet ist, jedes Mal nachdem der Sensor (24) eine Kennung gelesen hat, den ältesten Block von Druckbefehlen aus der gespeicherten Mehrzahl von Blöcken zu lesen und den ältesten Block aus der ersten Warteschlange zu entfernen, und
einer Druck-Steuereinheit (108),
wobei der Bildgenerator (106) dazu eingerichtet ist, für das jeweilige Objekt festzustellen, ob die gelesene Kennung der in dem ältesten Block enthaltenen Kennung entspricht,
wenn ja:
die Druck-Steuereinheit (108) zu veranlassen, den durch den ältesten Block von Druckbefehlen spezifizierten Inhalt auf das Objekt zu drucken,
andernfalls:
den ältesten Block in der zweiten Warteschlange zu speichern und
festzustellen (144), ob die zweite Warteschlange einen Block mit einer Kennung enthält, die der gelesenen Kennung entspricht,
wenn ja:
den Block aus der zweiten Warteschlange zu lesen (146) und den Block aus der zweiten Warteschlange zu entfernen, und
die Druck-Steuereinheit (108) dazu zu veranlassen, den durch den Block aus der zweiten Warteschlange spezifizierten Inhalt auf das Objekt zu drucken,
andernfalls:
das Objekt aus dem Produktionsweg abzuleiten.

7. System nach Anspruch 6, das weiter einen Motor (255) enthält, und wobei das Steuersystem (28) dazu eingerichtet ist, den Motor (255) dazu zu betreiben, um einen Druckkopf (230) des Drucksystems (26) weg von dem Objekt zu bewegen, das abgeleitet werden soll, wenn ein solches Objekt daran vorbei transportiert wird.

8. System nach Anspruch 6, wobei das Transportsystem (23) dazu ausgestaltet ist, das Objekt abzuleiten, bevor das Objekt das Drucksystem (26) erreicht.

9. System nach Anspruch 6, wobei der gelesenen Kennung Informationen betreffend das Objekt zugeordnet sind, die eines oder mehrere von Inhalt, Transportinformation, Gewicht, Abmessungen und Empfänger enthalten.

10. System nach Anspruch 6, wobei das Drucksystem (26) wenigstens einen auf Abruf arbeitenden Tintenstrahldruckkopf (230) aufweist.

## Revendications

1. Procédé d'impression qui consiste à transporter des objets (22) séquentiellement sur un trajet de production vers un système d'impression (26), chaque objet (22) présentant un identifiant codé en indices sur l'objet, et une pluralité de blocs d'instructions d'impression (82) stockés dans une séquence ordonnée dans une première file d'attente, chaque bloc incluant un identifiant, le procédé comprenant pour chaque objet les étapes consistant à:
détecter et balayer (122) l'identifiant codé en indices sur l'objet;
lire (126) le bloc d'instructions d'impression le plus ancien à partir de la pluralité de blocs stockés et supprimer le bloc de commandes le plus ancien de la première file d'attente; et
déterminer (128) si l'identifiant balayé est associé à l'identifiant inclus dans le bloc le plus ancien,
si oui:
faire fonctionner (130, 132, 134) le système d'impression (26) pour imprimer le contenu spécifié par le plus ancien bloc d'instructions d'impression sur l'objet (22),
sinon:
stocker (142) le bloc le plus ancien dans une seconde file d'attente; et
déterminer (144) si la seconde file d'attente contient un bloc incluant un identifiant associé à l'identifiant balayé,
si oui:
lire (146) le bloc dans la seconde file d'attente et retirer ledit bloc de la seconde file d'attente; et
faire fonctionner (130, 132, 134) le système d'impression (26) pour imprimer le contenu spécifié par ledit bloc à partir de la seconde file d'attente sur l'objet,
sinon:
dévier l'objet du trajet de production.

2. Procédé selon la revendication 1, incluant en outre l'étape consistant à faire fonctionner un moteur pour éloigner une tête d'impression du système d'impression (26) de l'objet qui doit être dévié lorsque cet objet y est transporté.

3. Procédé selon la revendication 1, incluant en outre une déviation de l'objet avant que l'objet n'atteigne le système d'impression (26).

4. Procédé selon la revendication 1, dans lequel l'identifiant balayé est associé à des informations concernant l'objet incluant un ou plusieurs parmi des contenus, des informations d'expédition, un poids, des dimensions et un destinataire.

5. Procédé selon la revendication 1, dans lequel le système d'impression (26) comprend au moins une tête à jet d'encre de goutte à la demande (230).

6. Système (20) d'impression, comprenant:
un système de transport (23) configuré pour transporter des objets séquentiellement vers un système d'impression (26) sur un trajet de production, chaque objet présentant un identifiant codé en indices sur l'objet;
un système de commande (28) présentant une première file d'attente et une seconde file d'attente, dans lequel la première file d'attente présente une pluralité de blocs d'instructions d'impression (82) stockés dans celle-ci dans une séquence ordonnée, chaque bloc incluant un identifiant;
un capteur (24) configuré pour lire l'identifiant codé en indices sur chacun des objets transportés;
un générateur d'image (106) configuré, à chaque fois après que le capteur (24) ait lu un identifiant, pour lire le bloc d'instructions d'impression le plus ancien à partir de la pluralité de blocs stockés et pour supprimer le bloc le plus ancien de la première file d'attente; et
un dispositif de commande d'impression (108),
dans lequel le générateur d'image (106) est configuré pour déterminer pour l'objet respectif si l'identifiant lu est associé ou non à l'identifiant inclus dans le bloc le plus ancien,
si oui:
pour amener le dispositif de commande d'impression (108) à imprimer le contenu spécifié par le bloc d'instructions d'impression le plus ancien sur l'objet,
sinon:
pour stocker le bloc le plus ancien dans la seconde file d'attente; et
pour déterminer (144) si la seconde file d'attente contient un bloc incluant un identifiant associé à l'identifiant lu,
si oui:
pour lire (146) le bloc dans la seconde file d'attente et retirer ledit bloc à partir de la seconde file d'attente; et
pour amener le dispositif de commande d'impression (108) à imprimer un contenu spécifié par ledit bloc à partir de la seconde file d'attente sur l'objet,
sinon:
pour dévier l'objet du trajet de production.

7. Système selon la revendication 6, incluant en outre un moteur (255), et le système de commande (28) étant configuré pour faire fonctionner le moteur (255) pour éloigner une tête d'impression (230) du système d'impression (26) de l'objet qui doit être dévié lorsque cet objet y est transporté.

8. Système selon la revendication 6, dans lequel le système de transport (23) est configuré pour dévier l'objet avant que l'objet n'atteigne le système d'impression (26).

9. Système selon la revendication 6, dans lequel l'identifiant lu est associé à des informations concernant l'objet incluant un ou plusieurs parmi des contenus, des informations d'expédition, un poids, des dimensions et un destinataire.

10. Système selon la revendication 6, dans lequel le système d'impression (26) comprend au moins une tête à jet d'encre à goutte à la demande (230).
